# EUROPÄISCHE PATENTSCHRIFT

(11) **EP 2 633 203 B1**
(45) Veröffentlichungstag und Bekanntmachung des Hinweises auf die Patenterteilung: **20.03.2019**
(21) Anmeldenummer: 11751880.3
(22) Anmeldetag: 30.08.2011
(51) Int. Cl.: F02M 37/04

(54) **Zahnrad-Kraftstoffpumpe mit einer Anordnung zur Übertragung eines Drehmoments zwischen einer Welle und einer Nabe**
GEAR FUEL PUMP WITH AN ARRANGEMENT FOR TRANSMITTING A TORQUE BETWEEN A SHAFT AND A HUB
POMPE A CARBURANT A ENGRENAGE AVEC UN AGENCEMENT POUR LE TRANSFERT D'UN COUPLE ENTRE UN ARBRE ET UN MOYEU

(30) Priorität: 29.10.2010 DE 102010043118
(43) Veröffentlichungstag der Anmeldung: 04.09.2013
(73) Patentinhaber: Robert Bosch GmbH, 70442 Stuttgart (DE)
(72) Erfinder: FLO, Siamend, 70499 Stuttgart (DE); NITSCHE, Frank, 71686 Remseck Am Neckar (DE); ARNOLD, Juergen, 71672 Marbach Am Neckar (DE)
(86) Internationale Anmeldenummer: PCT/EP2011/064872
(87) Internationale Veröffentlichungsnummer: WO 2012/055611

(56) Entgegenhaltungen:
- FR-A- 952 194
- FR-A2- 2 496 792
- JP-A- 6 337 018
- JP-A- 2002 040 875
- US-A1- 2006 240 896

## Beschreibung

### Stand der Technik

Die Erfindung betrifft eine Zahnrad-Kraftstoffpumpe mit einer Welle und einem Zahnrad mit einer Nabe, wobei das Zahnrad mit der Welle mittels einer Anordnung verbunden ist

Vom Markt her bekannt sind Anordnungen zur Übertragung eines Drehmoments zwischen einer Welle und einer Nabe in einer Vielzahl von Ausführungen, etwa für Zahnradpumpen. Beispielsweise weisen solche Anordnungen einen oder mehrere Passstifte auf. Sofern die Welle und die Nabe dadurch in allen Raumrichtungen starr miteinander verbunden sind, kann zwar ein vergleichsweise hohes Drehmoment übertragen werden, jedoch können Toleranzen zwischen dem Antrieb und dem Abtrieb damit nicht ausgeglichen werden. Ist in anderen Ausführungen der Übergang von der Welle auf die Nabe mit einem Spiel behaftet, so können beispielsweise geringe Winkelfehler zwischen der Welle und der Nabe ausgeglichen werden, jedoch müssen dabei im Allgemeinen beträchtliche Koaxialitätsfehler in Kauf genommen werden.

Ferner sind entsprechende Anordnungen aus der US 2006/240896 A1 und der JP 6 337018 A

Ferner ist ebenso die FR952194 bekannt, das eine Anordnung zur Übertragung eines Drehmoments zwischen einer Welle und einer Nabe offenbart, wobei die Nabe wenigstens in etwa die Innengeometrie eines gleichseitigen n-Ecks aufweist, wobei die Welle mindestens eine Kugel aufweist, wobei die Kugel in einer Ausnehmung im Kupplungsabschnitt der Welle aufgenommen ist.

### Offenbarung der Erfindung

Das der Erfindung zugrunde liegende Problem wird durch eine Zahnrad-Kraftstoffpumpe nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die erfindungsgemäße Anordnung hat den Vorteil, dass ein Drehmoment zwischen einer Welle und einer Nabe übertragen werden kann, wobei die Nabe präzise auf der Welle zentriert und Winkelfehler zwischen der Welle und der Nabe ausgeglichen werden können. Dies ist beispielsweise vorteilhaft, wenn die Nabe ein Zahnrad umfasst bzw. ein Zahnrad ist, insbesondere bei einer Anwendung in einer Kraftstoff-Zahnradpumpe. Weiterhin ist ein axialer Ausgleich zwischen der Welle und der Nabe möglich. Die erfindungsgemäße Anordnung benötigt wenig Bauraum, und ist einfach und kostengünstig unter Verwendung von Normteilen herstellbar.

Die erfindungsgemäße Nabe weist wenigstens in etwa die Innengeometrie eines gleichseitigen n-Ecks auf. Dazu passend weist die Welle einen Kupplungsabschnitt mit einem im Wesentlichen kreisförmigen Querschnitt auf. Auf dem Kupplungsabschnitt ist mindestens ein Mitnehmerabschnitt drehfest angeordnet, der sich in Richtung einer Ecke des n-Ecks der Nabe erstreckt. Vorzugsweise, jedoch nicht zwingend, ist die Zahl der Mitnehmerabschnitte größer als Eins, so dass die Anordnung radialsymmetrisch ausgeführt sein kann.

Die Anordnung wird erfindungsgemäß verbessert, indem der Mitnehmerabschnitt kugelkappenförmig ist. Dadurch können auf einfache Weise Punktlasten oder Kerbwirkungen verkleinert oder sogar verhindert werden, und die Dauerfestigkeit der Anordnung erhöht werden.

Erfindungsgemäß ist vorgesehen, dass der Mitnehmerabschnitt an einem Mitnehmerelement gebildet ist, das in einer Ausnehmung im Kupplungsabschnitt der Welle aufgenommen ist. Durch die Verwendung eines Mitnehmerelements, welches über eine Oberfläche des Kupplungsabschnitts hinausragt, können der Kupplungsabschnitt und das mindestens eine Mitnehmerelement besonders einfach und kostengünstig hergestellt werden. Die Ausnehmung ist beispielsweise eine radiale Bohrung oder eine Nut in dem Kupplungsabschnitt.

Ergänzend dazu ist optional vorgesehen, dass das Mitnehmerelement in die Ausnehmung eingepresst ist. Damit kann die Anordnung einfach, kostengünstig und zugleich robust hergestellt werden,

Eine weitere vereinfachte Herstellung der Anordnung ergibt sich, wenn das Mitnehmerelement eine Kugel umfasst. Dadurch kann beispielsweise eine handelsübliche Stahl-Kugel für das Mitnehmerelement verwendet werden, wobei die Kugel vorzugsweise mit mehr als der Hälfte ihres Volumens in dem Kupplungsabschnitt angeordnet ist, also beispielsweise darin eingepresst oder verstemmt ist.

Die Anordnung wird weiter verbessert, wenn die Ausnehmung ein Sackloch und so dimensioniert ist, dass die Kugel mit ungefähr einem Drittel ihres Durchmessers über den Kupplungsabschnitt übersteht. Dadurch ist die Kugel genügend fest in dem Kupplungsabschnitt verankert, und steht zugleich genügend über, um das Drehmoment zu übertragen.

Eine weitere Ausgestaltung der Erfindung sieht vor, dass die Anordnung für jedes Eck des n-Ecks mindestens einen Mitnehmerabschnitt aufweist. Dadurch werden die Möglichkeiten der Anordnung maximiert, indem das Drehmoment über alle Ecken der Nabe übertragen wird, und somit eine sich ergebende Flächenpressung in der Summe minimiert werden kann. Somit wird die Dauerfestigkeit der Anordnung weiter verbessert.

Eine nochmals weitere Ausgestaltung der Erfindung sieht vor, dass der Kupplungsabschnitt eine umlaufende Erhebung in der Art eines Ringwulstes umfasst. Dadurch können die Mitnehmerabschnitte vergleichsweise weit über den Durchmesser der Welle hinausragen, wodurch die Möglichkeit zum Ausgleich von Toleranzen zwischen der Welle und der Nabe bzw. zwischen deren Drehachsen erhöht wird. Außerdem können so Winkelfehler besonders gut toleriert werden.

Die Möglichkeiten der Anordnung werden erweitert, wenn der Wulst eine wenigstens in etwa kreissegmentförmige Querschnittskontur aufweist, insbesondere, wenn er durch eine die zylindrische Welle durchdringende Kugelkontur gebildet wird. Damit können eventuelle Winkel-Toleranzen besonders gut ausgeglichen werden, wobei die Flächenpressung zwischen den Mitnehmerabschnitten und der Welle und/oder lokale Materialspannungen in übrigen Bereichen der Anordnung minimiert werden.

An Zahnrad-Kraftstoffpumpen werden im Allgemeinen vergleichsweise hohe Anforderungen in Bezug auf die Dichtheit und die Dauerfestigkeit gestellt. Außerdem sind Zahnrad-Kraftstoffpumpen häufig als separate Vorrichtungen ausgeführt, die beispielsweise auf eine aus einem Maschinengehäuse oder Motorgehäuse austretende Welle aufgesetzt werden. Eventuelle axiale und/oder Winkel-Toleranzen können durch die erfindungsgemäße Anordnung besonders gut ausgeglichen werden.

Nachfolgend werden beispielhafte Ausführungsformen der Erfindung unter Bezugnahme auf die Zeichnung erläutert. In der Zeichnung zeigen:
- Figur 1: ein Schema eines Kraftstoff-Einspritzsystems einer Brennkraftmaschine mit einer Zahnrad-Kraftstoffpumpe;
- Figur 2: eine perspektivische Ansicht einer Welle der Zahnrad-Kraftstoffpumpe von Figur 1 mit einem Kupplungsabschnitt;
- Figur 3: einen Längsschnitt durch die Welle nach Figur 2;
- Figur 4: eine Seitenansicht der Welle von Figur 2; und
- Figur 5: eine axiale Ansicht der Welle von Figur 2 zusammen mit einer schematischen Darstellung einer Nabe.

Es werden für funktionsäquivalente Elemente und Größen in allen Figuren auch bei unterschiedlichen Ausführungsformen die gleichen Bezugszeichen verwendet.

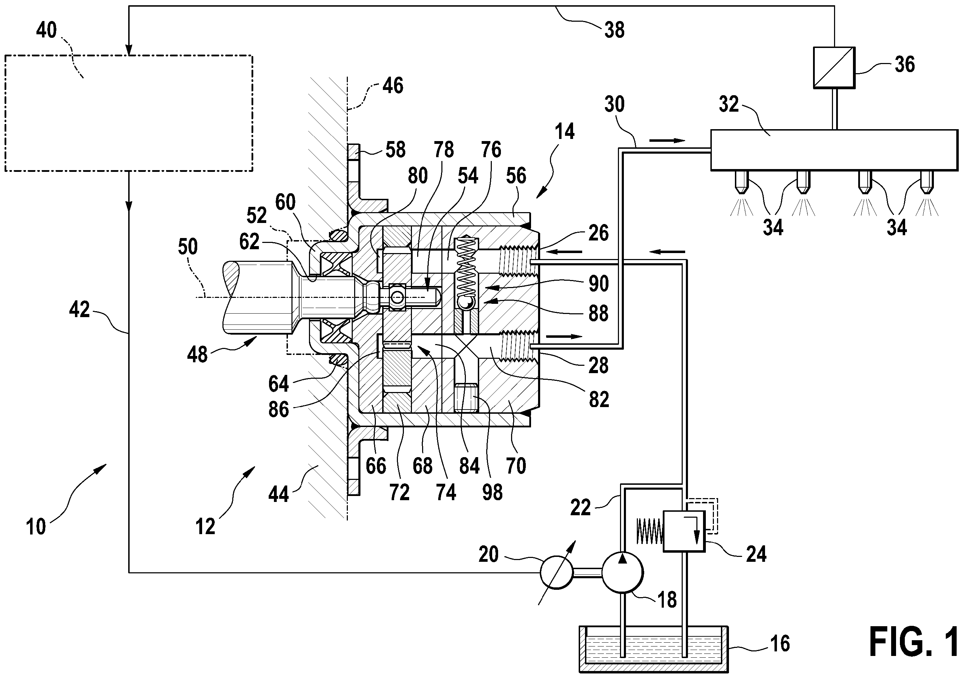

Ein in der Figur 1 insgesamt mit dem Bezugszeichen 10 bezeichnetes Kraftstoff-Einspritzsystem zur Versorgung einer Brennkraftmaschine 12 mit Kraftstoff umfasst eine Außenzahnradpumpe 14.

Das Kraftstoff-Einspritzsystem 10 weist einen Vorratsbehälter 16 zur Bevorratung von Kraftstoff auf. Mit Hilfe einer Vorförderpumpe 18, welche vorzugsweise mittels einer regelbaren Antriebseinrichtung insbesondere in Form eines Elektromotors 20 angetrieben ist, wird Kraftstoff aus dem Vorratsbehälter 16 in eine Niederdruckleitung 22 gefördert. Durch die Verwendung einer regelbaren Antriebseinrichtung für die Vorförderpumpe 18 kann die Fördermenge des Kraftstoff-Einspritzsystems 10 verstellt werden, so dass Förderverluste reduziert werden können, die sich durch Förderung einer Überschussmenge von Kraftstoff ergibt, welcher dann wieder in den Vorratsbehälter 16 rückgeführt werden muss.

Zur Begrenzung des Kraftstoffdrucks in der Niederdruckleitung 22 ist ein Niederdruckbegrenzungsventil 24 vorgesehen, mittels welchem bei Überschreiten eines vorgebbaren Maximaldrucks Kraftstoff aus der Niederdruckleitung 22 zurück in den Vorratsbehälter 16 geführt wird.

Die Niederdruckleitung 22 mündet an einem Eingang 26 der Außenzahnradpumpe 14. Diese beaufschlagt den über den Eingang 26 zugeführten Kraftstoff mit Hochdruck. Der mit Hochdruck beaufschlagte Kraftstoff gelangt über einen Ausgang 28 der Außenzahnradpumpe 14 zu einer Hochdruckleitung 30, welche zu einer Kraftstoffsammeleinrichtung in Form eines Rails 32 führt. Das Rail 32 versorgt Einspritzventile 34 mit druckbeaufschlagtem Kraftstoff. Die Einspritzventile 34 sind jeweils einem der Brennräume der Brennkraftmaschine 12 zugeordnet und ermöglichen eine direkte Einspritzung des Kraftstoffs in die Brennräume.

Der Druck in dem Rail 32 wird mit Hilfe eines Drucksensors 36 erfasst. Ein dem erfassten Druck entsprechendes Spannungssignal kann mit Hilfe einer Datenleitung 38 einem Steuergerät 40 zugeführt werden. Das Steuergerät 40 ist mittels einer Steuerleitung 42 mit dem Elektromotor 20 gekoppelt.

Die Brennkraftmaschine 12 umfasst ein abschnittsweise dargestelltes Brennkraftmaschinengehäuse 44, beispielsweise in Form eines Zylinderkopfs. Das Brennkraftmaschinengehäuse 44 weist eine nach außen weisende Gehäuseoberfläche 46 auf. Ferner umfasst die Brennkraftmaschine 12 eine Welle, insbesondere in Form einer Nockenwelle, welche um eine Wellenachse 50 drehbar an dem Brennkraftmaschinengehäuse 44 gelagert ist und eine Antriebswelle 48 für die Außenzahnradpumpe 14 bildet. Alternativ hierzu kann die Antriebswelle 48 durch eine von einer Welle der Brennkraftmaschine 12 separate Welle gebildet sein.

In dem Brennkraftmaschinengehäuse 44 ist eine Gehäuseöffnung 52 vorgesehen, welche von der Antriebswelle 48 durchsetzt ist, so dass ein Wellenende 54 sich über die Gehäuseoberfläche 46 hinaus in die Umgebung der Brennkraftmaschine 12 erstreckt.

Die Außenzahnradpumpe 14 weist ein topfförmiges Außengehäuse 56 auf, welches insbesondere mit Hilfe eines angeschweißten Flansches 58 mit dem Brennkraftmaschinengehäuse 44 verbunden ist, beispielsweise mittels einer Schraubverbindung. Das Außengehäuse 56 weist einen sich in Richtung auf die Brennkraftmaschine 12 erstreckenden Gehäusevorsprung 60 auf, welcher in die Gehäuseöffnung 52 der Brennkraftmaschine 12 eingesetzt ist. Der Gehäusevorsprung 60 weist eine im Querschnitt kreisförmige Gehäuseaussparung 62 auf, welche einen Durchtritt der Antriebswelle 48 ermöglicht.

Das Außengehäuse 56 der Außenzahnradpumpe 14 und das Brennkraftmaschinengehäuse 44 sind mit Hilfe einer ringförmigen Dichtung 64 gegeneinander abgedichtet.

In dem Außengehäuse 56 sind mehrere Gehäuseteile angeordnet, nämlich ein erstes Gehäuseteil 66, ein hierzu beabstandetes zweites Gehäuseteil 68 sowie ein als Gehäusedeckel wirkendes drittes Gehäuseteil 70. Das dritte Gehäuseteil 70 ist mit dem Außengehäuse 56 verschweißt. Bevorzugt ist es, wenn die Gehäuseteile 66, 68 und 70 zueinander parallele Planflächen aufweisen, so dass die Gehäuseteile mit diesen Planflächen metallische Dichtflächen bilden. Dabei kann mit Hilfe des dritten Gehäuseteils 70 eine Dichtkraft erzeugt werden, welche die Gehäuseteile 66 und 68 in das Außengehäuse 56 hineindrückt.

In axialer Richtung zwischen dem ersten Gehäuseteil 66 und dem zweiten Gehäuseteil 68 ist ein Gehäusering 72 angeordnet, in welchem eine Zahnradanordnung 74 angeordnet ist. Die Zahnradanordnung 74 bildet die eigentliche Fördereinheit der Außenzahnradpumpe 14. Die Zahnradanordnung 74 ist in axialer Richtung zwischen dem ersten Gehäuseteil 66 und dem zweiten Gehäuseteil 68 gelagert. Der Gehäusering 72 dient zur radialen Lagerung der Zahnradanordnung 74.

Die Außenzahnradpumpe 14 weist niederdruckseitig einen mit dem Eingang 26 verbundenen Niederdruckkanal 76 auf, welcher in dem dritten Gehäuseteil 70 ausgebildet ist. Der Niederdruckkanal 76 mündet an einer Saugniere 78, welche in dem zweiten Gehäuseteil 68 ausgebildet ist. Das erste Gehäuseteil 66 weist eine der Form der Saugniere 78 entsprechende Gegenniere 80 auf.

Druckseitig umfasst die Außenzahnradpumpe 14 einen mit dem Ausgang 28 verbundenen Hochdruckkanal 82 auf, welcher in dem dritten Gehäuseteil 70 ausgebildet ist. Der Hochdruckkanal 82 ist mit einer Druckniere 84 verbunden, welche in dem zweiten Gehäuseteil 68 ausgebildet ist. In dem ersten Gehäuseteil 66 ist eine der Form der Druckniere 84 entsprechende Gegenniere 86 angeordnet. Mit Hilfe der Gegennieren 80 und 86 wird erreicht, dass die Zahnradanordnung 74 von beiden Seiten her gleichmäßig mit Druck belastet wird.

Ferner umfasst die Außenzahnradpumpe 14 ein Druckbegrenzungsventil 88, mittels welchem bei Überschreiten eines vorgebbaren Betriebsdrucks eine Fluidverbindung zwischen dem Hochdruckkanal 82 und dem Niederdruckkanal 76 herstellbar ist. Das Druckbegrenzungsventil 88 ist in einem Verbindungskanal 90 angeordnet, welcher sich zwischen dem Hochdruckkanal 82 und dem Niederdruckkanal 76 erstreckt. Das Druckbegrenzungsventil 88 weist eine in den Verbindungskanal 90 eingepressten Ventilsitz, einen mit dem Ventilsitz zusammenwirkenden Ventilkörper und eine Ventilfeder auf, welche den Ventilkörper gegen den Ventilsitz drückt. Der Ventilsitz, der Ventilkörper und die Ventilfeder sind in der Zeichnung der Figur 1 ohne Bezugszeichen dargestellt.

Der Verbindungskanal 90 ist in Form einer Sacklochbohrung ausgebildet und an dessen offenem Ende mit Hilfe eines eingepressten Stopfens 98 verschlossen.

Die Integration des Eingangs 26 und des Ausgangs 28 sowie des Druckbegrenzungsventils 88 in das dritte Gehäuseteil 70 ermöglicht einen weitgehenden Verzicht auf zusätzliche Dichtelemente und somit eine weitere Verringerung der Bauteilzahl der Außenzahnradpumpe 14.

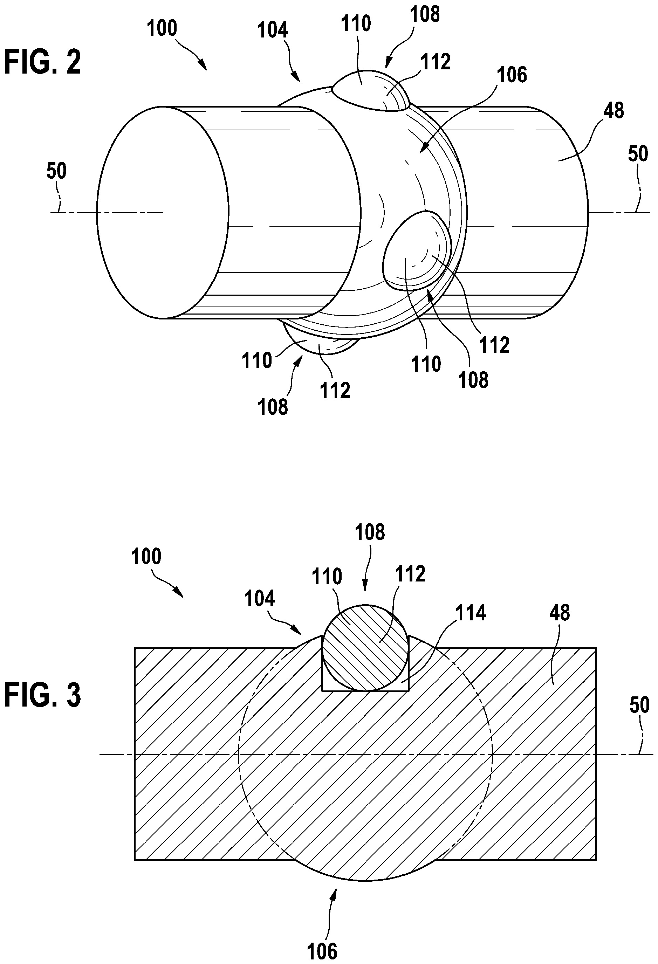

Die in der Figur 1 beschriebene Außenzahnradpumpe 14 weist eine WellenNaben-Verbindung ähnlich den nachfolgenden Figuren 2 bis 5 auf.

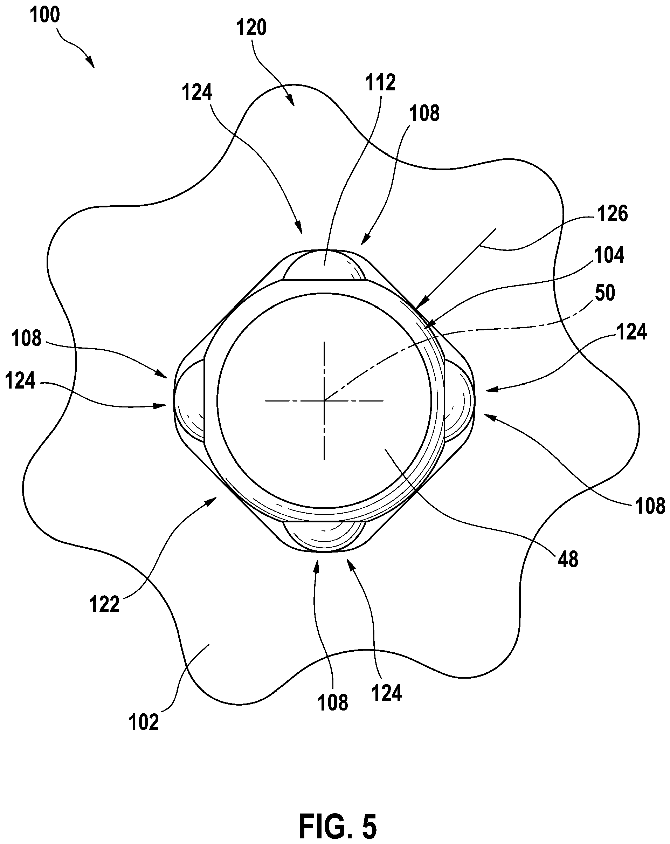

Die Figur 2 zeigt eine Anordnung 100 mit einer Welle 48 - beispielsweise die Antriebswelle 48 der Figur 1 - mit der geometrischen Grundform eines Zylinders. Eine zu der Anordnung 100 gehörende Nabe 102 ist nur in Figur 5 dargestellt. Die Welle 48 ist um die Wellenachse 50 drehbar - mittels in der Figur 2 nicht gezeigten Lagern - gelagert. In einem mittleren Bereich der Zeichnung weist die Welle 48 einen Kupplungsabschnitt 104 mit einem kreisförmigen axialen Querschnitt auf. Vorliegend weist der Kupplungsabschnitt 104 eine die zylindrische Welle 48 durchdringende Kugelkontur 106 in der Art eines Ringwulstes auf. Um den Kupplungsabschnitt 104 sind vier Mitnehmerabschnitte 108, welche jeweils an einem Mitnehmerelement 110 gebildet sind, radialsymmetrisch angeordnet. Die Mitnehmerelemente 110 umfassen jeweils eine Kugel 112 und sind relativ zu dem Kupplungsabschnitt 104 drehfest angeordnet. In der Zeichnung der Figur 2 sind nur drei der vier Mitnehmerabschnitte 108 sichtbar.

Die Figur 3 zeigt einen Längsschnitt der Welle 48 entlang der Wellenachse 50. Im oberen Bereich der Zeichnung von Figur 3 ist eine Ausnehmung 114 in dem Kupplungsabschnitt 104 dargestellt, in den das als Kugel 112 ausgebildete Mitnehmerelement 110 eingepresst ist. Vorliegend ist die Ausnehmung 114 ein Sackloch, welches so dimensioniert ist, dass die Kugel 112 mit ungefähr einem Drittel ihres Durchmessers über den Kupplungsabschnitt 104 übersteht. Dadurch ist der Mitnehmerabschnitt 108 kugelkappenförmig ausgebildet. Im unteren Bereich der Zeichnung von Figur 3 ist das dort befindliche Mitnehmerelement 110 nicht mit gezeichnet, um den Querschnitt der Kugelkontur 106 vollständig (strichpunktiert) darzustellen.

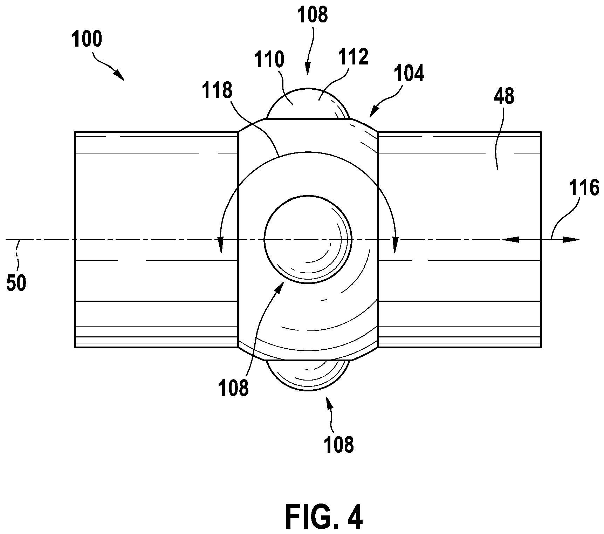

Die Figur 4 zeigt eine seitliche Ansicht der Welle 48 von Figur 2. Ergänzend zu der Figur 2 sind zwei Pfeile 116 und 118 eingezeichnet, welche die möglichen Freiheitsgrade für einen axialen Toleranzausgleich bzw. einen Winkelausgleich der Welle 48 kenntlich machen.

Die Figur 5 zeigt die Anordnung 100 mit der Welle 48 und der Nabe 102. Vorliegend ist die Nabe 102 ein Rotor 120 einer G-Rotorpumpe. Die Nabe 102 weist die Innengeometrie eines gleichseitigen n-Ecks 122 auf, wobei das n-Eck 122 vorliegend ein Quadrat ist und vier stark abgerundete Ecken 124 umfasst.

Man erkennt, dass die vier Seitenflächen des n-Ecks 122 an dem Kupplungsabschnitt 104 in etwa anliegen. Dies ist in der Zeichnung durch einen Pfeil 126 dargestellt. Dadurch wird die Nabe 102 auf der Welle 48 zentriert, wobei zugleich eine Kippbewegung zwischen der Welle 48 und der Nabe 102 um einen - von der konkreten Ausführung abhängigen - Winkel zulässig ist.

Weiterhin ist zu erkennen, dass die vier Mitnehmerabschnitte 108 bzw. die als Kugeln 112 ausgebildeten Mitnehmerelemente 110 sich jeweils in Richtung einer Ecke 124 des n-Ecks 122 erstrecken. Dabei ist vorliegend ein Radius der Ecke 124 größer als der Radius des in die Ecke 124 eingreifenden Mitnehmerelements 110. Es ist jedoch ebenso möglich, dass der Radius der Ecke 124 kleiner ist als der Radius des Mitnehmerelements 110.

Durch eine passende Dimensionierung des Kupplungsabschnitts 104 und der Innengeometrie des n-Ecks 122 und der sich jeweils ergebenden Freiheitsgrade kann die Anordnung 100 in Bezug auf die kraftübertragenden Flächen, sowie auf zu erwartende axiale Toleranzen und/oder auf Winkel-Toleranzen optimiert sein. Dazu können beispielsweise die Zahl der Ecken 124, und/oder die Abrundung der Ecken 124, und/oder der Durchmesser der Kugeln 112, und/oder die radiale Länge der Ausnehmungen 114, und/oder der Durchmesser des Kupplungsabschnitts 104, anders als in den Figuren 2 bis 5 dargestellt, bemessen sein.

Im Betrieb dreht sich die Welle 48 um die Wellenachse 50. Dabei überträgt die Welle 48 ein Drehmoment auf die Nabe 102. Die vorliegend vier Kugeln 112 sind vorzugsweise handelsübliche Normteile.

Es ist möglich, die Übertragung des Drehmoments zwischen der Welle 48 und der Nabe 102 auch nur mit dreien, zweien oder sogar nur mit einem Mitnehmerelement 110 auszuführen. Vorzugsweise sind die Mitnehmerelemente 110 radialsymmetrisch angeordnet. Weiterhin ist es möglich, die Innengeometrie der Nabe 102 an Stelle eines Quadrats auch als gleichseitiges Dreieck, Fünfeck und so weiter auszuführen. Dadurch ergeben sich zusätzliche Möglichkeiten, um die Größe des dauerfest übertragbaren Drehmoments einerseits und eventuelle Toleranzen andererseits, aufeinander abzustimmen.

Weiterhin ist zu erkennen, dass die Anordnung 100 der Figuren 2 bis 5 wenig oder keinen zusätzlichen Bauraum erfordert. Dadurch kann die Anordnung 100 besonders vielseitig verwendet werden.

## Patentansprüche

1. Zahnrad-Kraftstoffpumpe (14), mit einer Welle (48) und einem Zahnrad mit einer Nabe (102), wobei das Zahnrad mit der Welle (48) mittels folgender Anordnung (100) verbunden ist:
Anordnung (100) zur Übertragung eines Drehmoments zwischen der Welle (48) und der Nabe (102), wobei die Nabe (102) wenigstens in etwa die Innengeometrie eines gleichseitigen n-Ecks (122) aufweist, dessen Seitenflächen an einem im Querschnitt insgesamt kreisförmigen Kupplungsabschnitt (104) der Welle (48) wenigstens in etwa anliegen, und
dass die Welle mindestens einen Mitnehmerabschnitt (108) aufweist, der relativ zum Kupplungsabschnitt (104) drehfest ist und sich in Richtung einer Ecke (124) des n-Eckes (122) erstreckt, wobei der Mitnehmerabschnitt (108) kugelkappenförmig ist und wobei der Mitnehmerabschnitt (108) an einem Mitnehmerelement (110) gebildet ist, das in einer Ausnehmung (114) im Kupplungsabschnitt (104) der Welle (48) aufgenommen ist und wobei ein Radius der Ecke (124) größer oder kleiner ist als der Radius des in die Ecke (124) eingreifenden Mitnehmerelements (110).

2. Zahnrad-Kraftstoffpumpe (14) nach Anspruch 1, **dadurch gekennzeichnet, dass** das Mitnehmerelement (110) in die Ausnehmung (114) eingepresst ist.

3. Zahnrad-Kraftstoffpumpe (14) nach einem der Ansprüche 1 oder 2, **dadurch gekennzeichnet, dass** das Mitnehmerelement (110) eine Kugel (112) umfasst.

4. Zahnrad-Kraftstoffpumpe (14) nach Anspruch 3, **dadurch gekennzeichnet, dass** die Ausnehmung (114) ein Sackloch und so dimensioniert ist, dass die Kugel (112) mit ungefähr einem Drittel ihres Durchmessers über den Kupplungsabschnitt (104) übersteht.

5. Zahnrad-Kraftstoffpumpe (14) nach einem der vorhergehenden Ansprüche, **dadurch gekennzeichnet, dass** sie für jedes Eck (124) des n-Ecks (122) mindestens einen Mitnehmerabschnitt (108) aufweist.

6. Zahnrad-Kraftstoffpumpe (14) nach einem der vorhergehenden Ansprüche, **dadurch gekennzeichnet, dass** der Kupplungsabschnitt (104) eine umlaufende Erhebung in der Art eines Ringwulstes umfasst.

7. Zahnrad-Kraftstoffpumpe (14) nach Anspruch 6, **dadurch gekennzeichnet, dass** der Wulst eine wenigstens in etwa kreissegmentförmige Querschnittskontur aufweist, insbesondere, dass er durch eine die zylindrische Welle (48) durchdringende Kugelkontur (106) gebildet wird.

## Claims

1. Gear-type fuel pump (14), having a shaft (48) and a gearwheel with a hub (102), wherein the gearwheel is connected to the shaft (48) by means of the following arrangement (100): arrangement (100) for transmitting a torque between the shaft (48) and the hub (102), wherein the hub (102) has at least approximately the interior geometry of an equilateral n-sided polygon (122), the side surfaces of which at least approximately bear against a coupling portion (104), which is of circular overall cross section, of the shaft (48), and in that the shaft has at least one driver portion (108), which is fixed in terms of rotation relative to the coupling portion (104) and which extends in the direction of one corner (124) of the n-sided polygon (122, wherein the driver portion (108) has the shape of a spherical cap and wherein the driver portion (108) is formed on a driver element (110), which is accommodated in an aperture (114) in the coupling portion (104) of the shaft (48) and wherein a radius of the corner (124) is larger or smaller than the radius of the driver element (110) engangin in the corner (124).

2. Gear-type fuel pump (14) Claim 1, **characterized in that** the driver element (110) is pressed into the aperture (114).

3. Gear-type fuel pump (14) according to one of Claims 1 or 2, **characterized in that** the driver element (110) comprises a ball (112).

4. Gear-type fuel pump (14) according to Claim 3, **characterized in that** the aperture (114) is a blind hole and is dimensioned in such a way that approximately a third of the diameter of the ball (112) projects above the coupling portion (104).

5. Gear-type fuel pump (14) according to one of the preceding claims, **characterized in that** it has at least one driver portion (108) for each corner (124) of the n-sided polygon (122).

6. Gear-type fuel pump (14) according to one of the preceding claims, **characterized in that** the coupling portion (104) comprises an encircling raised portion in the form of an annular bead.

7. Gear-type fuel pump (14) according to Claim 6, **characterized in that** the bead has a cross-sectional contour at least approximately in the form of a circular segment, in particular **in that** it is formed by a spherical contour (106) passing through the cylindrical shaft (48).

## Revendications

1. Pompe à carburant à engrenage (14), comprenant un arbre (48) et une roue dentée avec un moyeu (102), la roue dentée étant raccordée à l'arbre (48) au moyen de l'agencement suivant (100) :
un agencement (100) pour transmettre un couple entre l'arbre (48) et le moyeu (102), le moyeu (102) présentant au moins dans approximativement la géométrie intérieure d'un polygone régulier à n côtés (122), dont les faces latérales s'appliquent au moins approximativement contre une portion d'accouplement (104) de l'arbre (48), dans l'ensemble de forme circulaire en section transversale, et en ce que l'arbre présente au moins une portion d'entraînement (108) qui est solidaire en rotation par rapport à la portion d'accouplement (104) et qui s'étend dans la direction d'un sommet (124) du polygone à n côtés (122), la portion d'entraînement (108) étant en forme de calotte sphérique et la portion d'entraînement (108) étant formée au niveau d'un élément d'entraînement (110) qui est reçu dans un évidement (114) dans la portion d'accouplement (104) de l'arbre (48) et un rayon du sommet (124) étant supérieur ou inférieur au rayon de l'élément d'entraînement (110) s'engageant dans le sommet (124).

2. Pompe à carburant à engrenage (14) selon la revendication 1, **caractérisée en ce que** l'élément d'entraînement (110) est pressé à l'intérieur de l'évidement (114).

3. Pompe à carburant à engrenage (14) selon l'une quelconque des revendications 1 ou 2, **caractérisée en ce que** l'élément d'entraînement (110) comprend une bille (112).

4. Pompe à carburant à engrenage (14) selon la revendication 3, **caractérisée en ce que** l'évidement (114) est un trou borgne et est dimensionné de telle sorte que la bille (112) dépasse au-delà de la portion d'accouplement (104) sur approximativement un tiers de son diamètre.

5. Pompe à carburant à engrenage (14) selon l'une quelconque des revendications précédentes, **caractérisée en ce qu'**elle présente pour chaque coin (124) du polygone à n côté (122) au moins une portion d'entraînement (108).

6. Pompe à carburant à engrenage (14) selon l'une quelconque des revendications précédentes, **caractérisée en ce que** la portion d'accouplement (104) comprend un rehaussement périphérique à la manière d'un bourrelet annulaire.

7. Pompe à carburant à engrenage (14) selon la revendication 6, **caractérisée en ce que** le bourrelet présente un contour en section transversale au moins approximativement en forme de segment circulaire, en particulier **en ce qu'**il est formé par un contour sphérique (106) traversant l'arbre cylindrique (48).
